# EUROPÄISCHE PATENTSCHRIFT

(11) **EP 2 651 580 B1**
(45) Veröffentlichungstag und Bekanntmachung des Hinweises auf die Patenterteilung: **09.12.2015**
(21) Anmeldenummer: 11797004.6
(22) Anmeldetag: 14.12.2011
(51) Int. Cl.: B21D 37/20, B23C 3/00

(54) **VERFAHREN ZUM FRÄSEN EINER AUSNEHMUNG IN EINEM WERKSTÜCK UND WERKSTÜCK MIT EINER AUSNEHMUNG**
METHOD FOR MILLING AN OPENING IN A WORKPIECE AND WORKPIECE COMPRISING AN OPENING
PROCÉDÉ DE FRAISAGE D'UN ÉVIDEMENT DANS UNE PIÈCE ET PIÈCE MUNIE D'UN ÉVIDEMENT

(30) Priorität: 17.12.2010 DE 102010061321
(43) Veröffentlichungstag der Anmeldung: 23.10.2013
(73) Patentinhaber: Gustav Klauke GmbH, 42855 Remscheid (DE)
(72) Erfinder: FRENKEN, Egbert, 52525 Heinsberg (DE)
(74) Vertreter: Müller, Enno
(86) Internationale Anmeldenummer: PCT/EP2011/072686
(87) Internationale Veröffentlichungsnummer: WO 2012/080293

(56) Entgegenhaltungen:
- EP-A1- 1 661 651
- JP-A- 9 117 845
- JP-A- 2004 202 688
- JP-A- 2005 305 595
- US-A- 4 648 761
- US-A1- 2010 095 815
- US-B1- 6 311 597

## Beschreibung

Die Erfindung betrifft zunächst ein Verfahren nach den Merkmalen des Oberbegriffes des Anspruchs 1. Ein solches Verfahren ist aus der EP 1 661 651 A1 bekannt. Darüber hinaus betrifft die Erfindung ein Werkstück nach den Merkmalen des Oberbegriffes des Anspruchs 2. Ein solches Werkstück ist aus der US 2010/0095815 A1 bekannt.

Beim Fräsen von Ausnehmungen ist es bekannt, mit einem Fräser, der wie angegeben im Betrieb eine bspw. zylindrische Mantelfläche erzeugt, Ausnehmungen in einem Werkstück auszubilden. Ein Eckbereich kann hierbei nur entsprechend einer Querschnittskrümmung der bspw. Zylinderfläche ausgebildet werden. Wenn eine schärfere Eckausbildung erreicht werden soll, ist eine Nachbearbeitung erforderlich, bspw. durch Schleifen oder Räumen.

Aus der US 2002/0071732 A1 ist es bekannt, mittels eines rotierenden Fräsers relativ scharfkantige Ecken auszubilden, indem ein im Grundriss mehrkantiger Fräser relativ zu einem Werkstück in einer zu einer Grundfläche des Werkzeugs parallelen Ebene verschoben wird, derart, dass ein äußeres Ende einer Schneidkante des drehenden Werkzeugs einen Verschiebeweg beschreibt, der mit einer gewünschten Eckausbildung in einer Ausnehmung des Werkstückes übereinstimmt. Dieses Verfahren bedingt eine relativ aufwändige Werkzeugmaschine wegen der zusätzlich zu der Drehung des Werkzeugs zugleich erforderlichen Verschiebebewegung zwischen Werkzeug und Werkstück.

Aus der US 2010/095815 A1 und der US 6,311,597 B1 sind Werkstücke bekannt, bei welchen die Ausnehmung durch Stanzen hergestellt ist.

Es besteht ein Bedürfnis, in möglichst rationeller Weise, das bedeutet insbesondere mit Hilfe eines Fräsers, zudem bevorzugt unter Nutzung bekannter Bearbeitungszentren, Universalmaschinen und Mehrspindel-Fräsautomaten, in Werkstücken auch Ausnehmungen herzustellen, die eine scharfe Eckausbildung aufweisen.

Ein Anwendungsfall für derartige gefräste Ausnehmungen ist beispielsweise bei Lochstanzen zu sehen. Hierzu kann etwa auf die DE 93 15 393 U1 und DE 93 15 392 U1 verwiesen werden. Zum Ausbilden von rechteckigen Löchern sind rechteckige Lochstanzen erforderlich, die in eine entsprechende rechteckige Ausnehmung aufweisende Matrize beim Stanzen einfahren. Ein solcher Lochstempel rechteckigen Querschnitts mit einer entsprechenden Matrize ist auch aus der US 3,494,003 bekannt.

Ausgehend von dem genannten Stand der Technik beschäftigt sich die Erfindung mit der Aufgabe, ein vorteilhaftes Verfahren zum Fräsen einer Ausnehmung in einem Werkstück anzugeben sowie ein Werkstück mit einer gefrästen Ausnehmung.

Diese Aufgabe ist zunächst beim Gegenstand des Anspruches 1 gelöst, wobei darauf abgestellt ist, dass weiter, in einer zweiten Ausrichtung des Fräsers, gegebenenfalls unter Ausbildung einer an einem Randkantenabschnitt quer zu dessen Erstreckungsrichtung gerichteten Abschrägung, mit Hilfe des die Stirnfläche der Hüllfläche der beispielsweise Zylinderfläche erzeugenden Abschnitts des Fräsers eine dem Übergang der Stirnfläche in die Mantelfläche entsprechende Eckausformung zwischen den aufeinandertreffenden Randkantenabschnitten ausgebildet wird.

Die Aufgabe ist weiter beim Gegenstand des Anspruches 2 hinsichtlich eines Werkstückes dadurch gelöst, dass unterhalb einer die Randkanten aufweisenden Fläche das Werkstück eine einer Randkante gegenüberliegende Öffnung aufweist.

Dadurch, dass zur Ausbildung der Randkante beide Abschnitten der Hüllfläche, sowohl die Stirnfläche wie die Mantelfläche, benutzt werden, kann zunächst, in der auch üblichen Ausrichtung des Fräsers unter Nutzung im Wesentlichen der Mantelfläche, wobei die Stirnfläche auch in dieser Ausrichtung zur Tiefenausbildung der Ausnehmung genutzt sein kann, in wesentlichem Umfang Material entfernt werden, gegebenenfalls soweit, dass nur noch die Eckbereiche einer weiteren Bearbeitung unter Nutzung des die Stirnfläche erzeugenden Abschnitts des Fräsers bedürfen, um dort die genannte Eckausbildung zu erreichen. Sodann kann mittels der genannten Vorderseite, bevorzugt auch der Vorderseite der von demselben Fräser erzeugten Stirnfläche der Hüllfläche, die Eckausformung entsprechend der Winkelausbildung zwischen der Stirnfläche und der Mantelfläche vorgenommen werden. Insbesondere dann, wenn die Ausnehmung mit einer geschlossenen Randkante ausgebildet wird, ist es möglich, die Eckausbildung unter Ausbildung einer an einem Randkantenabschnitt quer zu dessen Erstreckungsrichtung gerichteten Abschrägung zu erzeugen. Dies bietet sich an, wenn beispielsweise von schräg unten, durch ein Fenster etwa des Werkstücks, oder bei nur geringer Dicke des Werkstücks, diese Bearbeitung mit der entsprechenden Ausrichtung des Fräsers vorgenommen wird. Die Abschrägung kann auch erzeugt werden, wenn die Eckausbildung bezüglich der Ausnehmung von oben bzw. außerhalb, von der Seite, von der zunächst die erste Fräserbearbeitung vorgenommen wurde, erfolgt.

In einer ersten Ausgestaltung des Werkstücks ist dies bei einer Öffnung gegeben, die beispielsweise U-förmig verlaufende Randkanten aufweist. Gegenüber dem U-Steg ergibt sich die genannte Öffnung, da zufolge der Tiefe der Ausnehmung ein Fräser, bevorzugt dann mit seiner gegebenenfalls sich senkrecht zu seiner Längsachse erstreckenden Stirnfläche senkrecht zu der die Ausnehmung aufweisenden Ebene zur Ausbildung der Ecke in die Öffnung einfahren kann. Dies bezogen auf einen Fall, in dem, wie bevorzugt, die Randkante sich insgesamt und vollständig in einer einzelnen Ebene erstreckt.

Im Weiteren kann die der Randkante gegenüber liegende Öffnung auch durch eine gegenüber der Randkante in einer Richtung senkrecht zu der Ebene versetzt ausgebildete Öffnung gegeben sein. Dies ist insbesondere erreicht, wenn das Werkstück ein oder mehrere Fenster aufweist Derartige Fenster sind Öffnungen, die von einer Außenfläche des Werkstückes ausgehen, die bei geometrischer Betrachtung eine Schnittkante mit der die Ausnehmung aufweisenden Fläche ausbildet Bei einem rechteckigen oder quaderförmigen Werkstück kann es sich um ebene Flächen handeln, die sich unter Einschluss eines rechten Winkels schneiden. Es kann sich aber auch um sphärische Flächen handeln oder um Flächen, die sich in einem spitzen oder stumpfen Winkel schneiden. Die genannten Flächen müssen auch nicht in einer gemeinsamen Randkante aufeinanderstoßen. Sie können sich lediglich in einer gedachten geometrischen Verlängerung schneiden.

Die angesprochene Abweichung von der Scharfkäntigkeit der Eckausbildung hängt davon ab, entsprechend auch der erläuterten verfahrensmäßigen Vorgehensweise, mit welcher Geometrie der Übergang der Hüllfläche von der Stirnfläche in die Mantelfläche gestaltet ist.

Das genannte Werkstück lässt sich ersichtlich rationell durch Fräsen herstellen Und praktisch mit demselben Fräser und zwei ggf. gleichen Fräsern Nur durch Fräsen können sowohl die Ausnehmungen im Allgemeinen, wie auch die Eckbereiche der Ausnehmungen hergestellt werden.

Die beschriebene erste und zweite Ausrichtung des Fräsers kann jeweils mit dem selben Fräser, in einer Abfolge von Schritten, durchgeführt werden, wie auch mit unterschiedlichen Fräsern, die, insbesondere bei einem Mehrspindelautomaten, in entsprechender Abfolge, wobei, zumindest teilweise, eine Gleichzeitigkeit gegeben sein kann, zur Bearbeitung des Werkstücks geführt werden.

Bevorzugt ist auch, dass an einem Werkstück zwei Öffnungen mit unterschiedlichen Fräsverfahren, insbesondere mit unterschiedlichen Fräsverfahren wie sie nachstehend beschrieben sind, ausgebildet sind. Hierbei kann eine Ausnehmung eine oder mehrere, bevorzugt zwei Randkanten aufweisen, welche die genannte Abschrägung aufweisen. Die andere Öffnung kann Randkanten aufweisen, die sich nur in der Projektion zu einer scharfkantigen Randkante ergänzen.

Wenn auch bevorzugt ist, dass es sich um Randkanten handelt, die geradlinig verlaufen, ist ersichtlich mit der beschriebenen Vorgehensweise auch eine Ausnehmung herstellbar, bei der ein oder mehrere Randkanten gekrümmt verlaufen.

Nachstehend ist die Erfindung weiter anhand der beigefügten Zeichnungen erläutert, die jedoch nur Ausführungsbeispiele darstellen. Hierbei zeigt:
- Figur 1: eine perspektivische Ansicht eines als Matrize für einen Blechlocher ausgebildeten Werkstücks;
- Figur 2: eine Draufsicht auf den Gegenstand gemäß Figur 1;
- Figur 3: eine Seitenansicht des Gegenstandes gemäß Figur 1, gesehen in Richtung des Pfeils P in Figur 1;
- Figur 4: einen Querschnitt durch den Gegenstand gemäß Figur 1 beziehungsweise Figur 3, geschnitten entlang der Linie IV - IV in Figur 1;
- Figur 5: eine Darstellung gemäß Figur 4, geschnitten entlang der Linie V - V in Figur 3;
- Figur 6: einen Querschnitt durch den Gegenstand gemäß Figur 1 beziehungsweise Figur 2, geschnitten entlang der Linie VI - IV in Figur 2;
- Figur 7: eine erste Darstellung zur Erläuterung der Herstellung der Ausnehmung in dem Werkstück gemäß Figur 1 durch Fräsen;
- Figur 8: eine Draufsicht auf die Anordnung gemäß Figur 7, mit Darstellung der Verfahrwege der Fräser;
- Figur 9: einen Querschnitt durch die Anordnung gemäß Figur 8 geschnitten entlang der Linie IX - IX;
- Figur 10: eine Darstellung der Eckausbildung einer Ausnehmung in dem Gegenstand gemäß Figur 1;
- Figur 11: eine Draufsicht auf die Anordnung gemäß Figur 10;
- Figur 11a: eine Darstellung gemäß Fig. 11, bei einer U-förmigen Ausbildung der Ausnehmung;
- Figur 12: einen Querschnitt durch die Anordnung gemäß Figur 11, geschnitten entlang der Linie XII - XII;
- Figur 12a: einen Querschnitt durch die Anordnung gemäß Fig. 11a, geschnitten entlang der Linie XIIa-XIIa in Fig. 11a;
- Figur 13: einen Querschnitt durch die Anordnung gemäß Figur 12, geschnitten entlang der Linie XIII - XIII;
- Figur 14: eine Ansicht von schräg unten des Gegenstandes gemäß Figur 1, im Zuge einer weiteren Ausfräsung der unteren Ausnehmung;
- Figur 15: eine perspektivische Ansicht eines Hand-Verpressgerätes (teilweise) mit einem Lochstanzenvorsatz, bei zur Verdeutlichung von dem zu stanzenden Blech entfernter Patrize;
- Figur 16: eine Darstellung gemäß Figur 15, bei auf dem Blech aufsitzender Patrize und
- Figur 17: eine Darstellung nach vollendeter Ausstanzung, mit herausfallendem Stanzling.

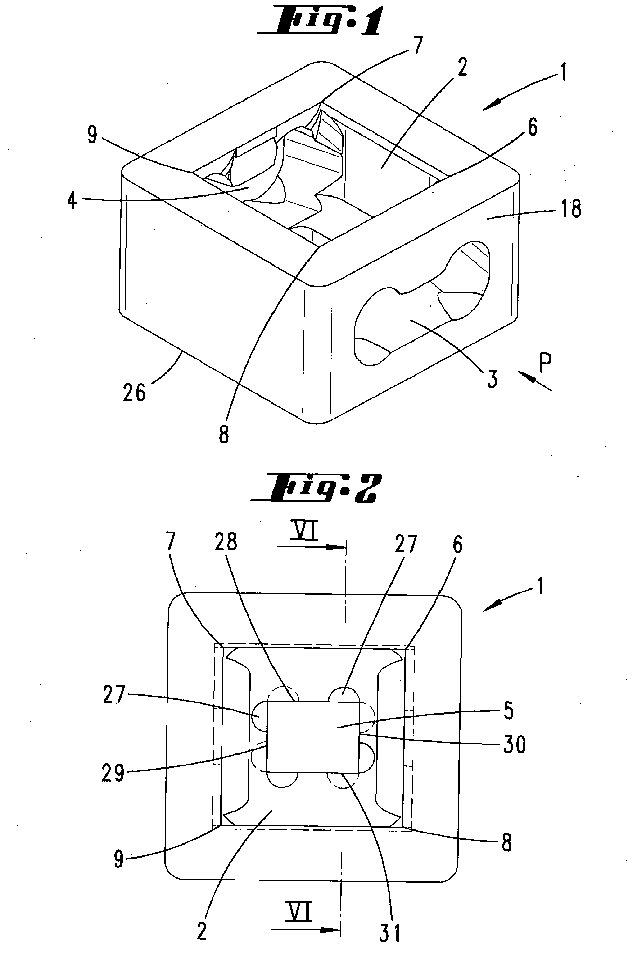

Dargestellt und beschrieben ist ein hier als Matrize eines Blech-Stanzwerkzeuges ausgebildetes Werkstück 1, vergleiche insbesondere Figuren 1 bis 3. Es handelt sich, bevorzugt in diesem Zusammenhang, um ein Stahlteil.

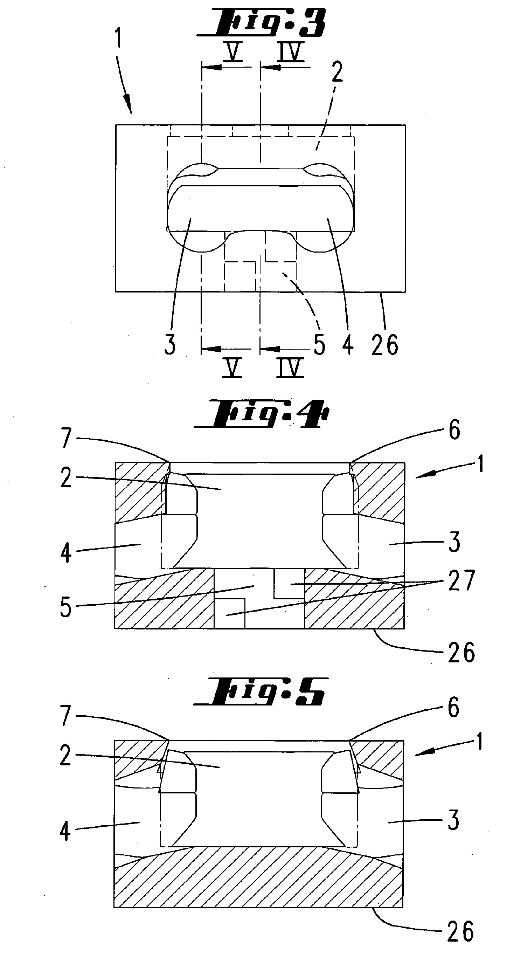

Das Werkstück 1 weist eine obere Ausnehmung 2, zwei seitliche Fenster 3, 4 (vgl. auch Figur 4 und 5) und eine untere Ausnehmung 5 auf.

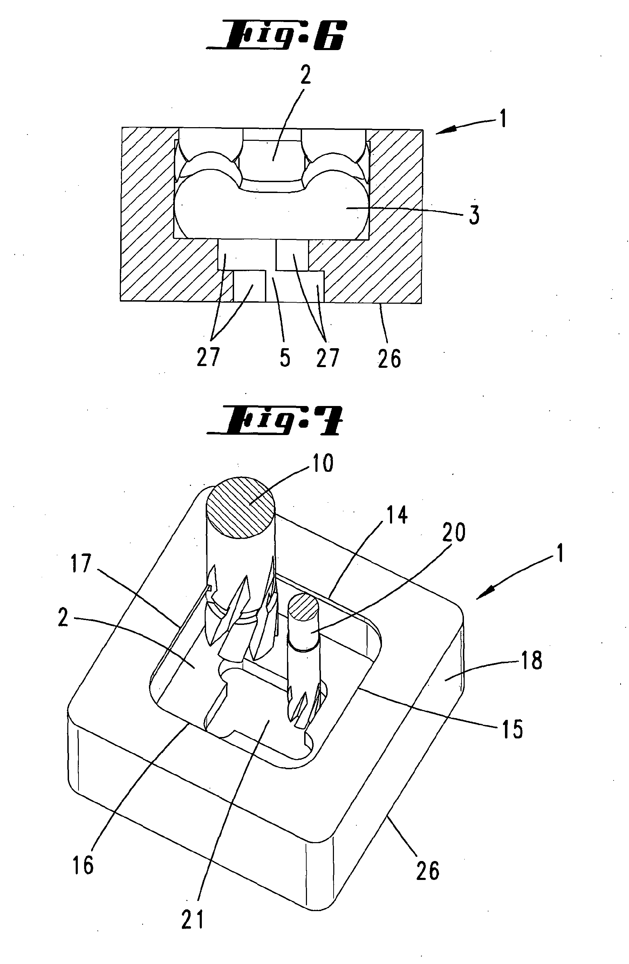

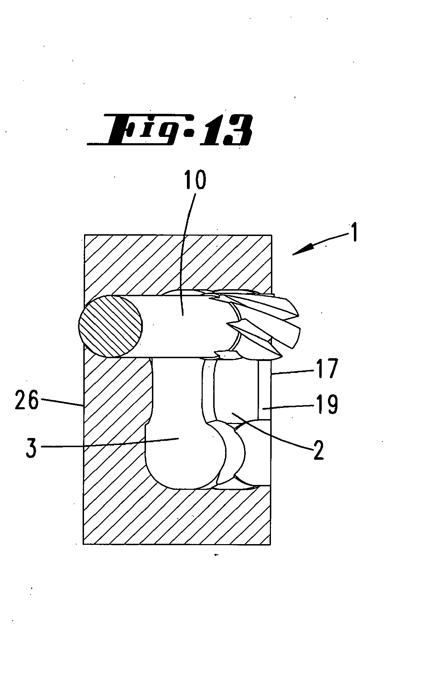

Mit Bezug zu den Figuren 7 bis 13 wird die obere Ausnehmung 2 durch Fräsen wie folgt hergestellt:

Es handelt sich ersichtlich um eine rechteckige oder quadratische Ausnehmung, die vier Ecken 6 bis 9 aufweist. Es handelt sich um Innenecken.

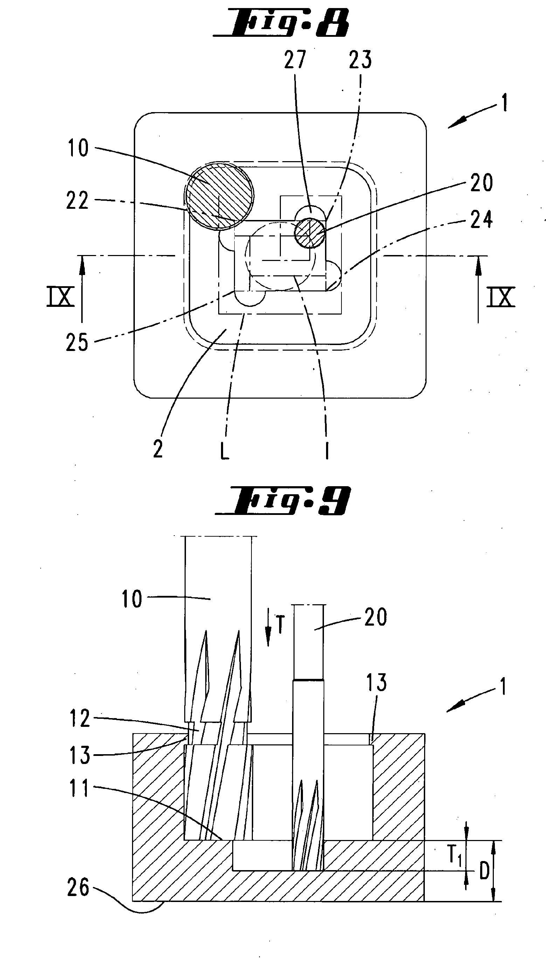

Die Ausnehmung 2 mit den Ecken 6 bis 9 in der Ausgestaltung gemäß Figur 7 wird zunächst durch den Fräser 10, der bei üblicher drehender Fräsbewegung eine zylindrische Hüllfläche erzeugt, durch Absenken des Fräsers 10 in das Werkstück 1 und Verfahren des Fräsers 10, bezogen auf einen Mittelpunkt eines im Querschnitt gegebenen Kreises der Hüllfläche, entlang der äußeren in Figur 8 strichpunktierten Linie L erzeugt.

Der Fräser 10 weist beim Ausführungsbeispiel versetzt von einer Vorderseite 11, siehe auch Figur 9, zu seiner - nicht dargestellten - Einspannung hin, einen umlaufenden nutartigen Rücksprung 12 auf. Die durch den Fräser 10 beim Drehen erzeugte Mantelfläche weist also in diesem Bereich eine Abweichung bezogen auf eine Zylinderfläche auf. Die Mantelfläche braucht auch ansonsten keine Zylinderfläche zu sein. Es kann sich auch beispielsweise um eine konische oder kegelförmige Fläche handeln.

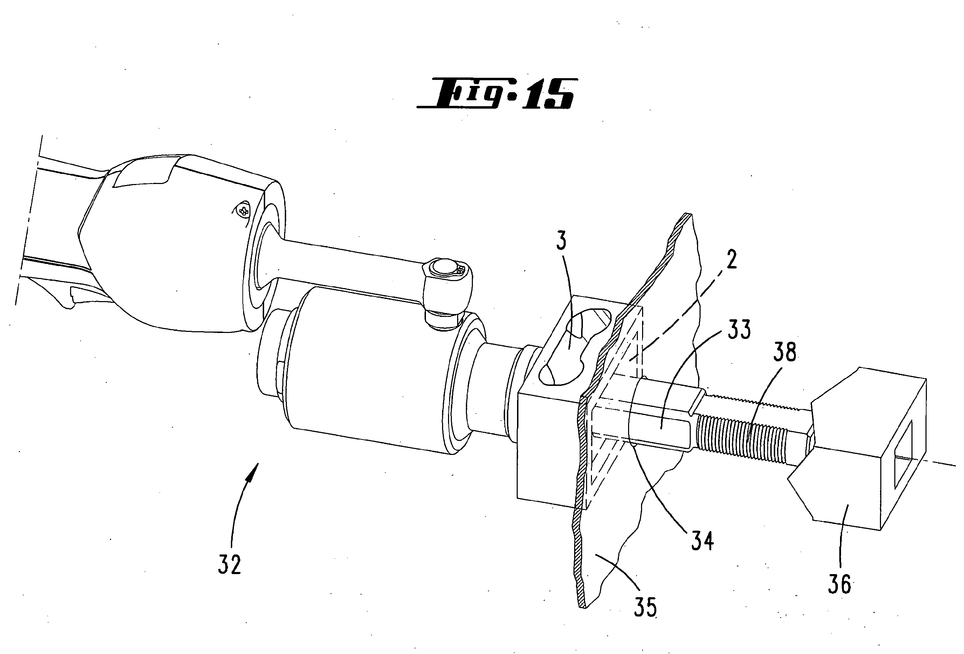

Der nutartige Rücksprung 12 dient dazu, einen Vorsprung 13 zu erzeugen, dessen innere Kante beim Ausführungsbeispiel die Randkanten 14 bis 17 der Ausnehmung 2 bilden. Ein solcher Vorsprung bzw. die in Tiefenrichtung damit gegebene anschließende Erweiterung einer diesbezüglichen Ausnehmung 2 ist beispielsweise im Hinblick auf eine hier als Ausführungsbeispiel beschriebene Matrize vorteilhaft, da ein Stanzling, siehe auch nachstehende Beschreibung im Zusammenhang mit den Figuren 15 bis 17, von der Wandung der Ausnehmung bei weiterem Niederdrücken freikommt und sich nicht verklemmen oder verkanten kann. In dieser Hinsicht ist auch die hier noch im Weiteren beschriebene Abschrägung 19 vorteilhaft.

Nachdem die Ausnehmung 2 mit Hilfe des Fräsers 10 in dieser Gestaltung, wie sie etwa auch aus Figur 8 ersichtlich ist, hergestellt ist, wird weiter mit dem Fräser 10, wobei es sich hier aber auch um einen zweiten Fräser handeln kann, von einer Seitenfläche 18 aus ein Fenster 3 gefräst. Beim Ausführungsbeispiel sind von zwei gegenüberliegenden Seitenflächen ausgehend zwei gegenüberliegende Fenster 3, 4 ausgebildet.

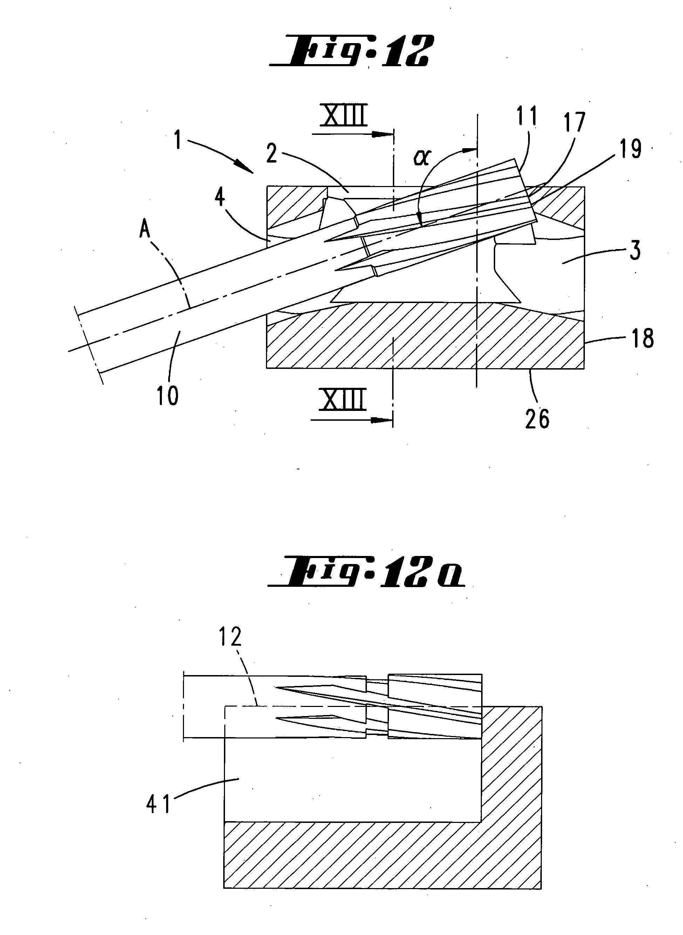

Durch das Fenster 3 wird mit dem Fräser 10 in einer Ausrichtung einer Längsachse A des Fräsers 10 im spitzen Winkel zu einer Öffnungsebene der Ausnehmung 2 und/oder unter Einschluss eines spitzen oder stumpfen Winkels Alpha (vgl. auch Figur 12) zu seiner vorherigen Ausrichtung betreffend die Ausbildung der Ausnehmung 2 (vgl. Figur 8), vorgefahren, bis mit der Vorderseite 11 durch Anliegen an der Randkante 17 und einem Verfahren des Fräsers 10 derart, dass die durch die Vorderseite 11 gebildete Stirnfläche der Hüllfläche an der Randkante 17 ausgerichtet ist, die gewünschte Eckausformung erreicht wird. Die Ausrichtung bedeutet, dass eine quer zur Längsachse des Fräsers in der Stirnfläche liegende Gerade mit der Randkante fluchtet. Da die Stirnfläche bevorzugt gleichsam berührend zu der Randkante verläuft, kann es sich um eine Gerade handeln, die mit der Randkante zusammenfällt.

Ersichtlich lassen sich durch die genannten zwei Fenster 3 und 4 der Fräser 10 jeweils soweit verfahren, dass durch das eine Fenster 4 die beiden Ecken 6, 8 gefräst werden können und durch das andere Fenster 3 die beiden weiteren Ecken 9, 7.

Zufolge der Schrägausrichtung des Fräsers 10 in Bezug auf eine Öffnungsebene der Ausnehmung 2 ergibt sich bei der beschriebenen Eckausbildung mit der Stirnfläche der zylindrischen Hüllfläche an der Randkante, gegen welche der Fräser hierbei mit seinem freien Ende anfährt, eine entsprechende Abschrägung. Beispielsweise die Abschrägung 19 an der Randkante 17, wie in Figur 12 dargestellt Wenn der Fräser von unten anfährt, etwa durch das beschriebene Fenster in dem Werkstück 1, ergibt sich die Abschrägung im Sinne einer Erweiterung in Tiefenrichtung T der Ausnehmung 2 (vgl. auch Figur 9). Der Fräser kann aber auch, etwa, wenn es sich um eine nicht geschlossene Ausnehmung handelt, mit einer Ausrichtung senkrecht zur Tiefenrichtung der Ausnehmung 2 anfahren oder, wie bereits angesprochen, von außen oben mit einer entsprechenden Schrägausrichtung. Wie ersichtlich, lassen sich hiermit auch entgegengesetzte Schrägungen an der Randkante erzeugen bzw. in dem genannten Fall, dass keine geschlossene Randkante vorliegt, auch eine parallel zur Tiefenrichtung der Ausnehmung geformte Randkante.

Damit ist in der oberen Fläche 19 des Werkstücks 1 eine Ausnehmung 2 durch Fräsen gebildet, die scharfwinklige, beim Ausführungsbeispiel rechtwinklige, Ecken 6 bis 9 aufweist. Es handelt sich um Innenecken. Die Ecken sind scharfkantig, wobei die tatsächliche Geometrie der Innenecken der tatsächlichen Geometrie der Außen-Eckausbildung zwischen Stirnfläche und Mantelfläche einer diesbezüglichen Hüllfläche eines Fräsers entspricht. Praxisrelevant ist hier ein Übergang, der etwa einen Radius von 2 mm oder weniger, bis hin zu beispielsweise 0,1 mm oder teilweise auch noch weniger, aufweist.

Bezüglich der Ausnehmung 5 wird, wieder zunächst mit Bezug zu Figur 7, mit einem Fräser 20, der grundsätzlich auch mit dem Fräser 10 identisch sein kann, beim Ausführungsbeispiel aber ersichtlich ein Fräser kleineren Durchmessers ist, im Durchgriff durch die Ausnehmung 2 eine erste Einsenkung 21 gefräst. Bevorzugt ist die Einsenkung 21, vgl. Verfahrtiefe T1 des Fräsers 20 in Fig. 9 in dem diesbezüglichen Bodenbereich des Werkstücks, noch nicht durchgehend, bildet also noch keine Durchgangsöffnung. Die Anordnung der Ausnehmung 5 unterhalb der Ausnehmung 2 ist ersichtlich eine Besonderheit des Ausführungsbeispiels. Es könnte auch die obere Ausnehmung 2 in der Weise hergestellt werden, wie es hier für die Ausnehmung 5 beschrieben ist. Auch könnte allein nur eine Ausnehmung 2 oder 5 vorgesehen sein, die in dieser Weise hergestellt wird.

Bevorzugt ist hierbei, wie auch aus Figur 8 ersichtlich, vgl. Verfahrlinie 1, dass der Fräser 20 an jedem der vier auszubildenden Eckbereiche 22 bis 25 den Eckbereich entlang einer der Randkanten überfährt. Und zwar ist im Einzelnen bevorzugt vorgesehen, dass der Fräser 20 den jeweiligen Eckbereich in Richtung der Randkante überfährt, entlang welcher der Fräser 20 auf den jeweiligen Eckbereich zubewegt wird.

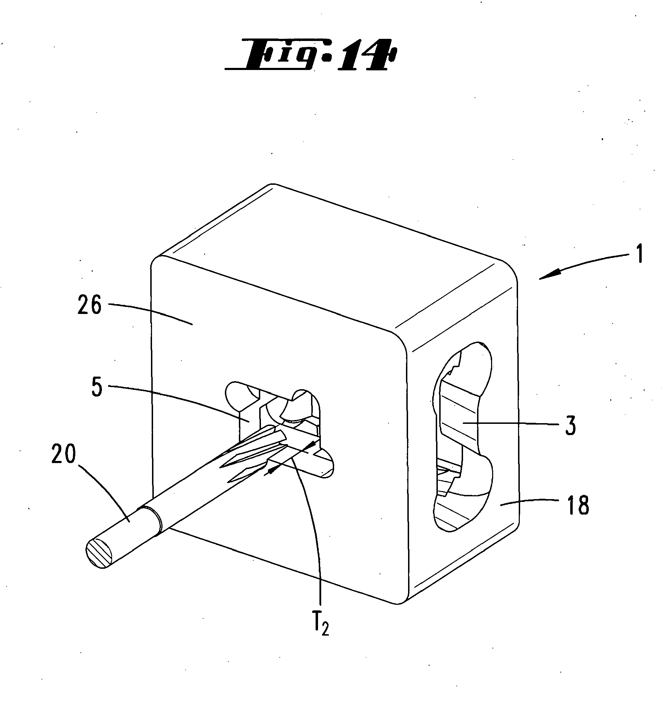

Wie weiter dann aus Figur 14 ersichtlich, wird nach dem Fräsen der Einsenkung 21 bei entgegengesetzter Ausrichtung des Fräsers 20, ausgehend von der Unterseite 26 des Werkstücks 1 der Fräser in gleicher Weise in das Werkstück eingesenkt und bewegt Jedoch mit einer solchen Tiefe T2, die sich von der Fläche der Unterseite 26 bis zu der Spitze des Fräsers, beim Ausführungsbeispiel der Vorderseite 11 des Fräsers 20 bemisst, dass die Summe aus der zuvor gegebenen ersten Tiefe T1 und der Tiefe T2 größer ist als die Dicke D des Werkstücks im Bereich der unteren Ausnehmung 5. In den Überfahrbereichen 27 der Eckbereiche 22 bis 25 überfährt der Fräser 20 in seiner jeweiligen Ausrichtung nur einmal, so dass sich in diesem Überfahrbereich keine Durchgangsöffnung ergibt. Die in Verfahrrichtung des Fräsers 20 gemessene Tiefe eines Überfahrbereichs entspricht bevorzugt mindestens einem Radius des in diesem Bereich von der Hüllfläche erzeugten Kreises.

Durch die beschriebene Verfahrensweise ergibt sich auch in den Eckbereichen in der Projektion eine scharfkantige Innenkontur der unteren Ausnehmung 5, wie dies beispielsweise aus den Figuren 2 und 6 ersichtlich ist. Beim Ausführungsbeispiel sind in den Eckbereichen praktisch 90°-Winkel zwischen den Randkanten 28 bis 31 dieser unteren Ausnehmung 5 verwirklicht. Zwischen den Eckbereichen, d.h. außerhalb der Überfahrbereiche 27, kann, wie etwa aus Fig. 4 ersichtlich, eine in Tiefenrichtung T der Ausnehmung 5 gerade und hier parallel zur Tiefenrichtung T verlaufende Wandung erzeugt werden.

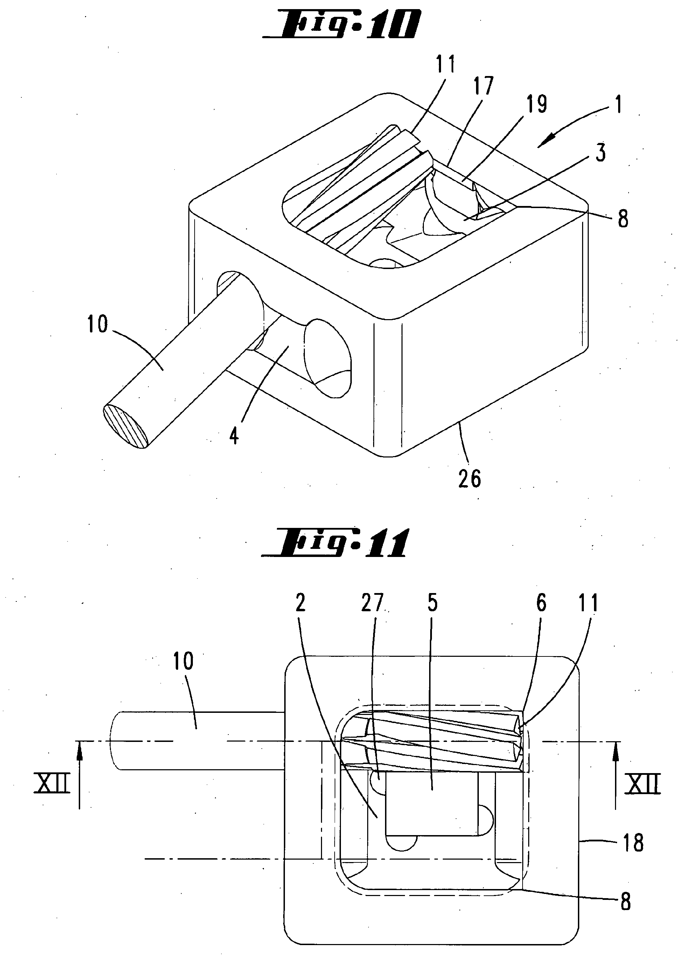

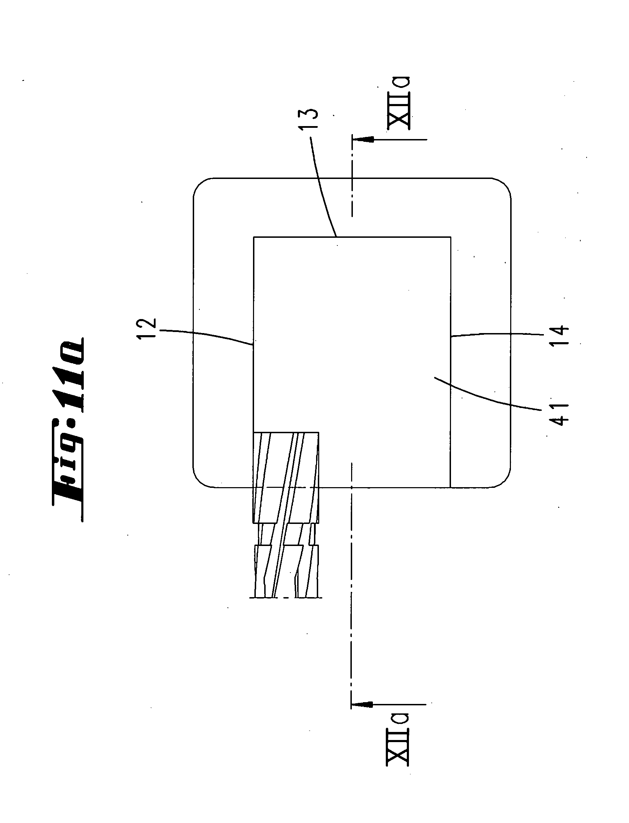

Mit Bezug zu den Figuren 11a und 12a ist eine Abwandlung der Konfiguration gemäß den Fig. 11 und 12 erläutert Hierbei ist die Ausnehmung 2 im Grundriss U-förmig gebildet, mit, bezogen auf eine Draufsicht, nicht geschlossen umlaufenden Randkanten 12, 13, 14. Gegenliegend zu der Randkante 13 ergibt sich eine Öffnung, durch welche der Fräser 10 mit einer Ausrichtung parallel zu einer die genannten Randkanten aufweisenden Ebene verfahren kann, dies bei einem Beispielsfall, wenn, wie bevorzugt, die genannten Randkanten sich in einer Ebene verlaufend vorgesehen sind. Es können aber auch beispielsweise nur zwei der Randkanten in einer Ebene verlaufen vorgesehen sein. Die Besonderheit dieser Ausgestaltung kann auch dahingehend beschrieben sein, dass der Fräser mit einer Längsachse quer zu einer Tiefenrichtung der Ausnehmung, siehe etwa Pfeil T in Fig. 9, zur Ausbildung der Ecke verfahren werden kann.

Die Ausnehmung kann in der Draufsicht, gesehen in Tiefenrichtung T, durch einen Bodenbereich 41 ganz oder teilweise geschlossen sein. Sie kann aber auch insoweit durchgehend ausgebildet sein.

Mit Bezug zu den Figuren 15 bis 17 ist die Anwendung eines solchen Werkstückes 1 als Matrize beim Blechstanzen erläutert.

Es ist teilweise ein Werkzeug 32 dargestellt, mit dem sich hydraulisch ein Zugbolzen 33 bewegen lässt. Zur weiteren Einzelheit bezüglich dieses Werkzeuges wird auch auf den Offenbarungsgehalt der nicht vorveröffentlichten Gebrauchsmusteranmeldung 202010008228 verwiesen.

Der Zugbolzen 33 weist in seinem unteren Bereich einen im Wesentlichen rechteckigen Querschnitt auf, der in die Ausnehmung 5 des Werkstücks 1 einpasst und diese durchsetzt. Die obere Ausnehmung 2 ist ersichtlich deutlich größer als die genannte untere Ausnehmung 5 und wird auch durch den Zugbolzen 33 durchsetzt. Hier liegt der Zugbolzen 33 nicht an den Randkanten an. Der Zugbolzen 33 durchsetzt auch ein zuvor gefertigtes beispielsweise gebohrtes rundes Loch 34 in einem auszustanzenden Blech 35. Oberseitig des Bleches 35, bezüglich dessen unterseitig das Werkstück 1 angeordnet ist, wird eine Patrize 36 auf den Zugbolzen 33 aufgesteckt. Die Patrize 36 weist ebenfalls einen rechteckigen Querschnitt auf, ist jedoch auf ihrer dem Blech 35 zugewandten Seite prismatisch gestaltet, um ein günstiges Ausstanzen zu ermöglichen.

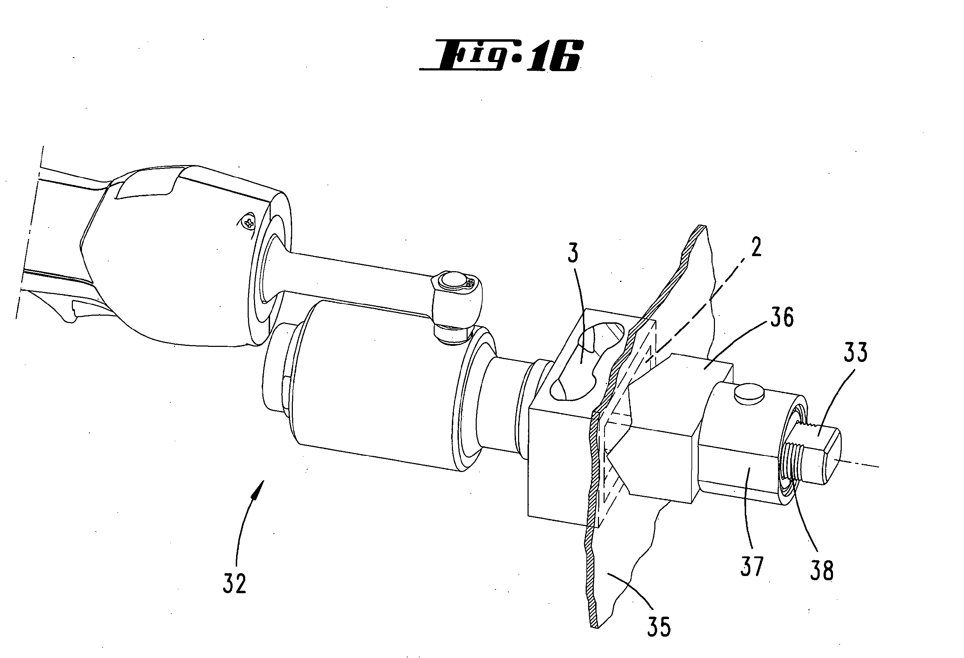

Wie aus Figur 16 zu erkennen, wird die Patrize 36 mit einer Haltemutter 37 an dem in diesem Bereich ein Gewinde 38 aufweisenden Zugbolzen 33 gesichert. Die Haltemutter 37 kann insbesondere so ausgebildet sein, wie sie in der nicht vorveröffentlichten deutschen Patentanmeldung 102010036482 beschrieben ist.

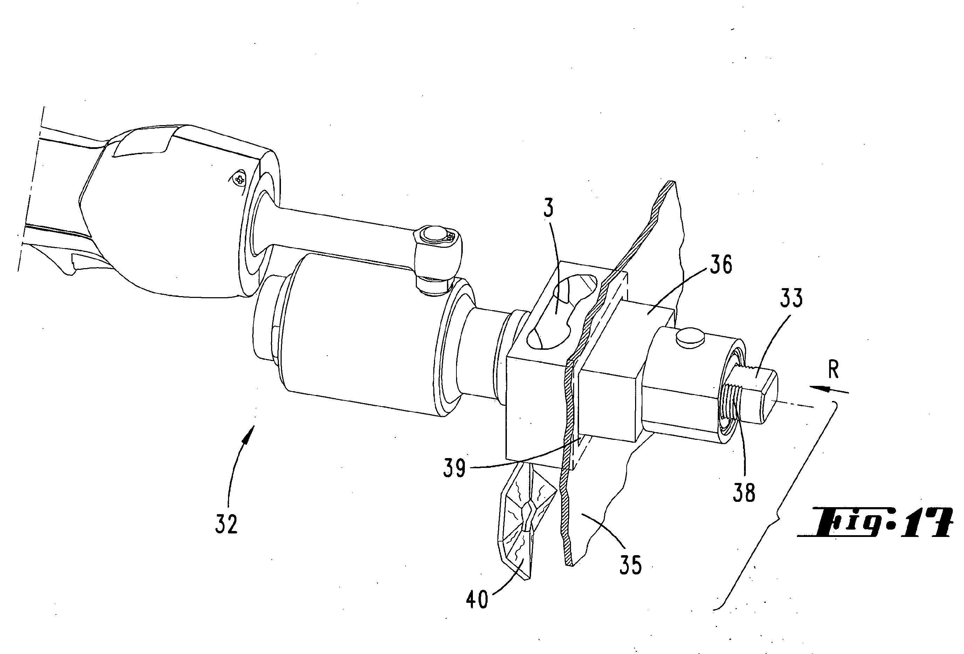

Sodann wird der Zugbolzen 33 durch das Werkzeug 32 in der Richtung R in Figur 17 bewegt, so dass die Patrize 36 eine rechteckige Öffnung 39 in dem Blech 35 erzeugt. Der hierbei gebildete Stanzling 40 kann, nachdem die Haltemutter 37 gelöst wurde und die Patrize 36 von dem Zugbolzen 33 abgenommen wurde, aus dem ebenfalls vom Zugbolzen abgenommen Werkstück 1 durch ein Fenster 3 beziehungsweise 4 entnommen werden oder herausfallen.

**Bezugszeichenliste**

| | | | |
|---|---|---|---|
| 1 | Werkstück | 27 | Überfahrbereiche |
| 2 | Ausnehmung | 28 | Randkante |
| 3 | Fenster | 29 | Randkante |
| 4 | Fenster | 30 | Randkante |
| 5 | Ausnehmung | 31 | Randkante |
| 6 | Ecke | 32 | Werkzeug |
| 7 | Ecke | 33 | Zugbolzen |
| 8 | Ecke | 34 | Loch |
| 9 | Ecke | 35 | Blech |
| 10 | Fräser | 36 | Patrize |
| 11 | Vorderseite | 37 | Haltemutter |
| 12 | Rücksprung | 38 | Gewinde |
| 13 | Vorsprung | 39 | Öffnung |
| 14 | Randkante | 40 | Stanzling |
| 15 | Randkante | A | Längsachse |
| 16 | Randkante | D | Dicke |
| 17 | Randkante | L | Linie |
| 18 | Seitenfläche | l | Verfahrlinie |
| 19 | Abschrägung | T | Tiefenrichtung |
| 20 | Fräser | T1 | Tiefe |
| 21 | Einsenkung | T2 | Tiefe |
| 22 | Eckbereich | Alpha | Winkel |
| 23 | Eckbereich | R | Richtung |
| 24 | Eckbereich | | |
| 25 | Eckbereich | | |
| 26 | Unterseite | | |

## Patentansprüche

1. Verfahren zum Fräsen einer Ausnehmung in einem Materialstück, wobei die Ausnehmung in einem Eckbereich in einem Winkel aufeinander treffende Randkantenabschnitte aufweist, unter Nutzung eines im Betrieb eine Hüllfläche, beispielsweise eine Zylinderfläche, mit einer Mantelfläche und einer Stirnfläche, ausfüllenden Fräsers, ausgebildet wird, wobei der Eckbereich zunächst in einer ersten Ausrichtung des Fräsers, bevorzugt entsprechend einer Längsachse der Ausnehmung, mit Hilfe des die Mantelfläche der beispielsweise Zylinderfläche erzeugenden Abschnitts des Fräsers ausgebildet wird, **dadurch gekennzeichnet, dass** weiter, in einer zweiten Ausrichtung des Fräsers, ggf. unter Ausbildung einer an einem Randkantenabschnitt quer zu dessen Erstreckungsrichtung gerichteten Abschrägung, mit Hilfe des die Stirnfläche der Hüllfläche der beispielsweise Zylinderfläche erzeugenden Abschnitts des Fräsers eine dem Übergang der Stirnfläche in die Mantelfläche entsprechende Eckausformung zwischen den aufeinandertreffenden Randkantenabschnitten ausgebildet wird.

2. Werkstück (1), insbesondere Matrize für einen Blechlocher, mit einer Randkanten (14-17) aufweisenden Ausnehmung (2, 5), vorzugsweise einer Ausnehmung (2, 5) mit entsprechend einem Rechteck ausgebildeten Randkanten (14-17), wobei unterhalb einer die Randkanten (14-17) aufweisenden Fläche das Werkstück eine einer Randkante (14-17) gegenüber liegende Öffnung aufweist, **dadurch gekennzeichnet, dass** die Rand kanten in Inneneckbereichen (22-25) scharfkantig, mit einem Radius von 2 mm oder weniger, aufeinander stoßen, wobei ein Eckbereich (22-25) durch Fräsen hergestellt ist,

3. Werkstück nach Anspruch 2, **dadurch gekennzeichnet, dass** das Werkstück (1) ein oder mehrere Fenster (3, 4) aufweist.

4. Werkstück nach einem der Ansprüche 2 oder 3, **dadurch gekennzeichnet, dass** ein Fenster (3; 4) von einer Außenfläche des Werkstücks (1) ausgeht, die bei geometrischer Betrachtung eine Schnittkante mit der die Ausnehmung aufweisenden Fläche ausbildet.

5. Werkstück nach einem der Ansprüche 2 bis 4, **dadurch gekennzeichnet, dass** an dem Werkstück (1) eine Ausnehmung mehrere Randkanten aufweist, welche eine Abschrägung aufweist und eine Öffnung Randkanten aufweist, die sich nur in Projektion zu einer scharfkantigen Randkante ergänzen.

## Claims

1. Method for milling a cutout in a piece of material, the cutout having peripheral edge portions in a corner region that meet one another at an angle, and the cutout being formed using a milling cutter which during operation occupies an enveloping surface, for example a cylindrical surface, and has a lateral face and an end face, the corner region being initially formed in a first orientation of the milling cutter which preferably corresponds to a longitudinal axis of the cutout, by use of the portion of the milling cutter that generates the lateral face of the, for example cylindrical, surface, **characterized in that** in addition, in a second orientation of the milling cutter, optionally while forming a bevel which on a peripheral edge portion is oriented transversely with respect to the direction of extent thereof, a corner shape that corresponds to the transition of the end face to the lateral face is formed between the mutually meeting peripheral edge portions, by use of the portion of the milling cutter that creates the end face of the enveloping surface of the, for example cylindrical, surface.

2. Workpiece (1), in particular a die for a sheet metal punch, having a cutout (2, 5) which has peripheral edges (14-17), preferably a cutout (2, 5) which has peripheral edges (14-17) formed corresponding to a rectangle, the workpiece having an opening opposite from a peripheral edge (14-17), beneath a surface that has the peripheral edges (14-17), **characterized in that** the peripheral edges meet one another in internal corner regions (22-25) in a sharp-edged manner with a radius of 2 mm or less, a corner region (22-25) being produced by milling.

3. Workpiece according to Claim 2, **characterized in that** the workpiece (1) has one or more windows (3, 4).

4. Workpiece according to either of Claims 2 and 3, **characterized in that** a window (3, 4) originates from an outer surface of the workpiece (1) which from a geometric standpoint forms a cut edge with the surface that has the cutout.

5. Workpiece according to any of Claims 2 to 4, **characterized in that** on the workpiece (1), one cutout has a plurality of edges which have a bevel and one opening has edges which together make up a sharp-edged periphery only when viewed in projection.

## Revendications

1. Procédé pour fraiser un évidement dans une pièce de matériau, l'évidement présentant dans une zone de coin des sections d'arête de bord convergeant dans un angle, en utilisant une fraiseuse remplissant, lors de l'utilisation, une surface d'enveloppe, par exemple une surface cylindrique, avec une surface latérale et une surface frontale, la zone de coin étant d'abord réalisée dans une première orientation de la fraiseuse, de préférence correspondant à un axe longitudinal de l'évidement, à l'aide de la section de la fraiseuse qui produit la surface latérale de la surface par exemple cylindrique, **caractérisé en ce qu'**ensuite, dans une deuxième orientation de la fraiseuse, le cas échéant en formant un chanfrein orienté transversalement par rapport à la direction de son extension dans une section d'arête de bord, une forme de coin correspondant à la transition de la surface frontale à la surface latérale est réalisée entre les sections d'arête de bord convergentes à l'aide de la section de la fraiseuse qui produit la surface frontale de la surface d'enveloppe de la surface par exemple cylindrique.

2. Pièce usinée (1), en particulier matrice pour un emporte-pièces, ayant un évidement (2, 5) présentant des arêtes de bord (14-17), de préférence un évidement (2, 5) avec des arêtes de bord (14-17) réalisées selon un rectangle, la pièce usinée présentant, en dessous d'une surface présentant les arêtes de bord (14-17), une ouverture située en opposition à une arête de bord (14-17), **caractérisée en ce que** les arêtes de bord se rencontrent dans des zones de coin intérieur (22-25) à arêtes vives, avec un rayon de 2 mm ou moins, une zone de coin (22-25) étant réalisée par fraisage.

3. Pièce usinée selon la revendication 2, **caractérisée en ce que** la pièce usinée (1) présente une ou plusieurs fenêtres (3, 4).

4. Pièce usinée selon l'une des revendications 2 ou 3, **caractérisée en ce qu'**une fenêtre (3, 4) part d'une surface extérieure de la pièce usinée (1) qui, considérée de façon géométrique, forme un bord de découpe avec la surface présentant l'évidement.

5. Pièce usinée selon l'une des revendications 2 à 4, **caractérisée en ce que** sur la pièce usinée (1), un évidement présente plusieurs arêtes de bord, lequel présente un chanfrein et une ouverture présente des arêtes de bord qui ne se complètent pour former une arête de bord tranchant que dans une projection.
